**Europäisches Patentamt**

**European Patent Office**

**Office européen des brevets**

(19)

(11) Numéro de publication : **0 489 667 A1**

## (12) DEMANDE DE BREVET EUROPEEN

(21) Numéro de dépôt : **91420425.0**

(22) Date de dépôt : **02.12.91**

(51) Int. Cl.$^5$ : **C04B 35/00, C04B 35/18**

(30) Priorité : **04.12.90 FR 9015633**

(43) Date de publication de la demande :
**10.06.92 Bulletin 92/24**

(84) Etats contractants désignés :
**AT BE CH DE ES FR GB GR IT LI NL SE**

(71) Demandeur : **PECHINEY RECHERCHE**
**(Groupement d'Intérêt Economique régi par**
**l'Ordonnance du 23 Septembre 1967)**
**Immeuble Balzac**
**10, place des Vosges**
**F-92400 Courbevoie, La Défense 5 (FR)**

(72) Inventeur : **Alary, Jean André**
**20 avenue Jean Moulin**
**F-13120 Gardanne (FR)**

(74) Mandataire : **Jacquet, Michel et al**
**PECHINEY 28, rue de Bonnel**
**F-69433 Lyon Cédex 03 (FR)**

(54) **Procédé de fabrication de matériaux réfractaires et leurs applications en fonderie d'alliages corrosifs.**

(57)   Procédé de fabrication d'un matériau réfractaire du type non-façonné comportant le mélange d'agrégats réfractaires et d'un liant assurant une cohésion par liaison chimique, la mise en forme de ce mélange et sa cuisson, et caractérisé en ce que :

— on mélange une charge comportant des particules réfractaires à répartition granulométrique polymodale, avec un liant liquide constitué d'un mélange en milieu aqueux de polymères minéraux à base de polysilicate et d'un polymère minéral comportant des groupements sialate,

— on met en forme la pâte obtenue et après durcissement du mélange à une température comprise entre la température ambiante et 200°C,

— on porte le mélange durci à une température comprise entre 200 et 1300°C, de manière à obtenir un matériau réfractaire de caractéristiques mécaniques élevées, de grande résistance au choc thermique et à la corrosion chimique.

EP 0 489 667 A1

## DOMAINE DE L'INVENTION

L'invention concerne le domaine des matériaux réfractaires destinés à contenir un métal ou un alliage liquide ou à entrer en contact avec un métal ou alliage liquide, qu'il s'agisse de revêtements de four d'élaboration ou de maintien, d'accessoires de tranfert de métal liquide ou qu'il s'agisse de moules ou de noyaux utilisés en fonderie. Plus particulièrement, l'invention concerne des matériaux réfractaires présentant une résistance améliorée à la corrosion par des alliages très corrosifs tels que les alliages d'aluminium-lithium à l'état liquide.

## ETAT DE LA TECHNIQUE

En fonderie, la durée de vie des revêtements et garnissages en contact avec le métal liquide, constituent, avec leur coût d'entretien ou de renouvellement, un des éléments qui influe le plus sur l'économie du procédé.

On attend d'un matériau réfractaire une réactivité chimique la plus faible possible vis à vis du métal ou de ses impuretés, une réfractarité élevée, pas de macroporosité, une résistance à l'écrasement à chaud suffisante pour supporter les contraintes de compression, une ténacité élevée pour s'opposer à la fissuration, une dilatation thermique la plus faible possible et une conductivité thermique la plus élevée possible pour résister aux chocs thermiques.

Le terme "matériau réfractaire" recouvre en fait une très grande diversité de compositions généralement à base d'agrégats réfractaires inorganiques et non-métalliques, le plus souvent solidarisés par un liant. Aussi est-il nécessaire, pour mieux situer la présente invention, de rappeler les différents critères de classification des matériaux réfractaires qui figurent par exemple dans l'ouvrage "Techniques de l'ingénieur" - A 7300 pages 1 à 18 - 1986.

Les matériaux réfractaires peuvent être classés de nombreuses manières, par exemple par la nature chimique des agrégats et liants, par l'usage final, par le type de mise en oeuvre.

Ce dernier critère conduit à distinguer les matériaux réfractaires façonnés des non-façonnés : les premiers seront représentés typiquement par des briques liées ensuite entre elles par un joint, les seconds, les non-façonnés, sont des produits du type pisé ou béton, pour lesquels il n'y a pas de mise en forme préalable à l'application finale.

Un autre critère est la nature des liaisons qui assurent la cohésion du matériau céramique : liaison céramique quand le durcissement est obtenu par frittage durant la cuisson, liaison hydraulique dans le cas des ciments durcissant à la température ambiante après gachage à l'eau, liaison chimique quand le durcissement provient d'une réaction chimique d'un liant non hydraulique genéralement minéral, tel un silicate, à une température qui peut être la température ambiante, enfin liaison organique grâce à des liants carbonés du type goudron, brai, résine.

Dans le domaine de l'invention, on trouve aussi bien des matériaux façonnés que non-façonnés, à liaison soit céramique, soit hydraulique soit chimique.

## OBJET DE L'INVENTION

Avec la mise au point d'alliages corrosifs à l'état liquide, en particulier les alliages d'aluminium et de lithium, désignés par Al-Li dans la suite de cette demande, les matériaux réfractaires usuels ont révélé une tenue à la corrosion insuffisante nécessitant leur changement fréquent et entraînant des surcoûts de fonctionnement élevés.

Les matériaux réfractaires connus à ce jour, et acceptables sur un plan économique, n'ayant pas apporté entière satisfaction, la demanderesse a donc recherché une solution à ce problème.

Il est bien connu de l'homme du métier que le point faible des réfractaires façonnés est le joint, aussi la demanderesse a-t-elle recherché, pour cette raison et aussi parce que les non-façonnés sont par inhérence de grande souplesse d'utilisation, une solution au problème posé dans le domaine des réfractaires non-façonnés

L'invention a pour objet un procédé de fabrication d'un matériau réfractaire permettant un contact prolongé avec un métal ou un alliage à l'état liquide, en particulier un alliage d'AL-Li, et son application soit comme revêtement, généralement comme revêtement intérieur de four, de goulotte, de tout ou partie d'équipement avec lequel le métal liquide peut être en contact au cours de son élaboration, de sa transformation, soit comme matériau réfractaire façonné en objet en particulier comme moule de coulée, moule permanent ou non, tube, plaque, etc...

## DESCRIPTION DE L'INVENTION

Selon l'invention, le procédé de fabrication d'un matériau réfractaire du type non-façonné comporte le mélange d'agrégats réfractaires et d'un liant assurant une cohésion par liaison chimique, la mise en forme de ce mélange et sa cuisson, et est caractérisé en ce que :

– on mélange, à une température comprise entre la température ambiante et 200°C, une charge comportant des agrégats réfractaires constituée de particules réfractaires qui présentent une répartition granulométrique polymodale, avec un liant liquide alcalin constitué d'un mélange en milieu aqueux de polymères minéraux à base de polysilicate et d'un polymère minéral comportant des groupements sialate (-SiO-O-AlO-O-)$^-$ M$^+$, M désignant un métal alcalin, et on malaxe le mélange de manière à répartir uniformément le liant dans la charge et à former une pâte homogène,

– on met en forme la pâte obtenue et après durcissement du mélange à une température comprise entre la température ambiante et 200°C,

– on porte le mélange durci à une température comprise entre 200 et 1300°C, de manière à obtenir un matériau réfractaire de caractéristiques mécaniques élevées, de grande résistance au choc thermique et à la corrosion chimique.

Face au problème posé par l'agressivité des alliages d'aluminium à l'état liquide, en particulier ceux d'Al-Li, la demanderesse ayant observé que les agrégats réfractaires et liants habituellement utilisés en fonderie subissaient une corrosion importante a testé un grand nombre de mélanges d'agrégats réfractaires et de liants minéraux et a eu la surprise de constater qu'un liant contenant des groupements sialate (-SiO-O-AlO-O-)$^-$M$^+$, en combinaison avec certains agrégats réfractaires particuliers, permettait de fabriquer un matériau réfractaire doté simultanément de caractéristiques mécaniques, de tenue au choc thermique et de tenue à la corrosion nettement supérieures à celles des réfractaires de l'art antérieur.

Un tel liant contenant des groupements sialate, décrit et désigné par PS pour polysialate dans le certificat d'utilité français n° 2 489 291, est déjà connu pour donner, par mélange avec des charges minérales éventuellement réfractaires, des objets moulés ayant des qualités des céramiques, en particulier une excellente stabilité thermique et dimensionnelle, mais ces propriétés en elles-mêmes ne permettaient pas de prévoir la possibilité d'obtenir simultanément les propriétés des réfractaires selon l'invention, en particulier une amélioration de la tenue à la corrosion en présence d'un métal liquide notamment d'un métal liquide agressif tel qu'un alliage d'Al-Li.

Selon l'invention, un autre liant contenant des groupements sialate et des groupements siloxo (-SiO-O-AlO-O-SiO-O-)$^-$M$^+$ peut convenir également, M étant un métal alcalin. Un tel liant est décrit dans la demande de brevet français n°2 464 227, il est désigné par PSS pour poly(sialate-siloxo).

Ces liants peuvent contenir en outre des polysilicates de métal alcalin de sorte que la composition globale du liant selon l'invention, au stade du mélange avec les agrégats avant départ de molécules d'eau, satisfait aux relations suivantes (rapports molaires) , dans le cas où le métal alcalin est le potassium, mais la transposition est aisée dans le cas d'un autre métal alcalin :

$K_2O/SiO_2$ compris entre 0,20 et 0,40

$SiO_2/AL_2O_3$ compris entre 3,5 et 4,5

$H_2O/AL_2O_3$ compris entre 14 et 20

Ces liants, au stade du mélange avec les agrégats, sont des dispersions liquides réactives de sorte que la durée pendant laquelle ils sont utilisables est limitée et est fonction de la température, par exemple un liant à base de PS aura une durée de vie en pot de 24 heures à 25 °C.

Ces liants réactifs sont eux-mêmes obtenus par mélange, au moment de l'emploi, de deux composants inertes pris séparément. Certains de ces liants sont commercialisés sous la marque déposée Géopolymite R .

Selon l'invention, les agrégats réfractaires sont choisis parmi le spinelle de magnésie, le carbure de silicium, le nitrure de silicium, la magnésie électrofondue, le corindon blanc ou brun, le corindon globulaire, l'alumine, la zircone, l'oxyde de titane, la silice, l'oxyde de chrome, le carbone et le graphite, les oxydes de terre rare en particulier l'oxyde d'yttrium $Y_2O_3$. Les agrégats réfractaires sont généralement utilisés sous forme de poudre mais on peut aussi utiliser ces matériaux sous forme de fibrilles, de trychites. De préférence on choisit le spinelle de magnésie.

Le rapport pondéral "charge"/liant" est compris entre 1 et 10. De préférence, il se situe entre 3 (mélange 75/25) et 9 (mélange 90/10). En effet, il est nécessaire, pour obtenir un mélange homogène et un mouillage total de la charge minérale par le liant, d'avoir un malaxage efficace et donc que le mélange de la charge minérale et du liant ait une viscosité adaptée : au rapport pondéral de 1 correspond la limite de fluidité acceptable et à celui de 9 correspond la limite de viscosité acceptable. En outre, le liant est connu pour être généralement le point faible du matériau réfractaire, plus sensible que l'agrégat réfractaire à la corrosion chimique, de sorte qu'il n'est habituellement pas souhaitable d'avoir un taux de liant excédent le taux nécessaire à la mise en oeuvre, c'est à dire permettant la préparation d'une pâte homogène, de sorte que un rapport voisin de 5 est souvent un bon compromis.

La taille particulaire moyenne des agrégats réfractaires est comprise entre 2 mm et 0,1 µm et leur répartition granulométrique est polymodale, c'est à dire qu'elle présente au moins deux maxima principaux, comme cela apparait si l'on trace l'histogramme donnant la fraction massique ou volumique en fonction de la taille particulaire.

Ainsi, selon l'invention, il est favorable pour obtenir un matériau réfractaire de caractéristiques mécaniques élevées d'avoir une répartition granulométrique de la charge d'agrégats réfractaires telle que l'on ait une répartition bimodale avec au moins 50 % en poids de la charge de taille particulaire supérieure à 800 µm et avec au moins 20 % en poids de la charge de taille particulaire inférieure à 400 µm. Ainsi, il est favorable d'avoir dans l'intervalle granulométrique 400-800 µm une fraction représentant moins de 30 % en poids de l'ensemble de la charge.

Les proportions de chaque fraction granulométrique sont déterminées soit empiriquement soit par le calcul pour optimiser la compacité. Une telle répartition permet d'obtenir, un matériau réfractaire de volume poreux optimum, généralement compris entre 0,05 et 0,1 cm³/g (mesure au porosimètre à mercure).

En effet, la demanderesse a observé qu'un volume poreux suffisamment faible était nécessaire pour obtenir une tenue mécanique suffisamment élevée, mais que par ailleurs un volume poreux assez élevé était necessaire pour obtenir une résistance aux chocs thermiques suffisante.

Selon l'invention il est avantageux, notamment pour renforcer les propriétés mécaniques, de remplacer une fraction granulométrique de la charge d'agrégats refractaires par une ou plusieurs autres charges d'agrégats réfractaires de nature chimique différente, mais sensiblement de même granulométrie pour conserver globalement la répartition granulométrique volumique optimum initiale.

Ainsi, notamment dans le cas du spinelle de magnésie, il a été trouvé avantageux de remplacer la fraction granulométrique inférieure à 800 µm par des particules de carbure de silicium ou de corindon globulaire de granulométrie voisine ou par des particules de corindon globulaire et de magnésie (granulométrie inférieure à 800 µm).

La demanderesse a aussi observé qu'il pouvait être avantageux d'incorporer à la charge d'agrégats réfractaires des additifs non réfractaires, la proportion pondérale des agrégats réfractaires devant être toujours d'au moins 75 % de la charge totale.

Selon l'invention, on peut incorporer à la charge d'agrégats réfractaires des additifs minéraux pour améliorer les propriétés du réfractaire final, notamment ses caractéristiques mécaniques.

Ainsi, il a été trouvé avantageux d'incorporer à la charge de 1 à 10 % en poids d'un dérivé boré tel que le Sogébor C (marque déposée) et de préférence de 3 à 6%.

Par ailleurs, dans le but de contrôler et notamment d'augmenter la porosité du matériau réfractaire final, on peut introduire dans la charge un agent porogène qui peut être constitué par une matière thermodégradable. Par exemple, l'addition d'une matière thermodégradable, telle que la sciure de bois, à la charge d'agrégats réfractaires modifie la porosité et améliore considérablement la tenue au choc thermique. On peut incorporer jusqu'à 5% en poids d'agent porogène, et de préférence de 1 à 3 %.

Dans un but analogue, la demanderesse a trouvé intéressant d'incorporer une charge formée de particules creuses (sphères creuses fermées), par exemple le corindon globulaire, de manière à augmenter la porosité fermée et donc la résistance au choc thermique, sans augmenter la porosité ouverte qui tend à diminuer les propriétés de résistance mécanique et de tenue à la corrosion par infiltration d'alliage liquide dans les pores ouverts. Typiquement, on remplace 10 à 30% en poids d'une charge réfractaire, et en particulier la fraction granulométrique inférieure à 400 µm, par des particules creuses réfractaires de même granulométrie (< 400 µm), et on observe une amélioration des propriétés comme indiqué précédemment.

Selon l'invention, on mélange le liant, sous forme liquide, et l'ensemble des additifs éventuels et de la charge minérale constituée d'un mélange de poudres variant par la granulométrie et la nature chimique comme déjà mentionné, de manière à former une pâte au moyen de tout appareil connu pour assurer l'empâtage et le mélange intime d'une poudre et d'un liquide, il peut s'agir de malaxeurs utilisés pour la fabrication d'encres, de peintures, pour la fabrication du pain, d'appareils du type bétonnière, d'appareils assurant un malaxage en continu à simple ou double vis avec la possibilité dans ce cas d'extruder en continu un matériau réfractaire ayant la forme souhaitée, typiquement une plaque ou un tube.

Selon une modalité particulière de l'invention, les constituants de départ du matériau réfractaire sont mélangés et mis en forme en continu à l'aide d'une extrudeuse puis durcis par chauffage en sortie d'extrudeuse pour donner par exemple des plaques ou des tubes en matière réfractaire.

Selon l'efficacité du malaxage, sa durée pourra varier de quelques minutes à plusieurs dizaines de minutes. Le liant étant à ce stade un produit réactif comme déjà signalé, la pâte obtenue par malaxage doit être utilisée avant le durcissement du liant : soit comme pisé recouvrant et protégeant les équipements en contact avec les alliages à l'état liquide, essentiellement les fours, les conduits, goulottes de transfert, soit comme "pâte à modeler" pour fabriquer des objets en matériau réfractaire par exemple par moulage, extrusion ou injection. La vitesse de durcissement de la pâte dépend de la température, elle va d'une quinzaine d'heures à la température ambiante à environ une heure vers 85°C. Le durcissement s'opère sans retrait ni fissuration.

Après mise en forme et durcissement de la pâte à une température pouvant aller de la température ambiante à 200°C, le matériau réfractaire est porté à une température comprise entre 200 et 1300°C afin de renforcer ses propriétés mécaniques.

Dans le cas d'un pisé, le chauffage est obtenu à l'aide de brûleurs.

Dans le cas de la fabrication d'objets, par exemple d'objets moulés, la vitesse de montée en température est contrôlée et comprise entre 50 et 200°C/h. De préférence, la montée est effectuée avec des paliers à des températures intermédiaires.

La demanderesse a eu la surprise de constater que les matériaux réfractaires obtenus selon l'invention présentaient de meilleures performances mécaniques et une meilleure tenue à la corrosion que les matériaux couramment utilisés en fonderie selon l'art antérieur notamment dans le cas où l'alliage liquide est un alliage d'Al-Li. Avec les matériaux réfractaires de l'invention, la durée de fonctionnement d'un four entre deux interventions pour réfection a été pratiquement doublée, ce qui est considérable sur le plan économique.

La demanderesse a avancé une hypothèse pour expliquer le comportement surprenant des matériaux réfractaires obtenus selon l'invention : le volume poreux des matériaux obtenus selon l'invention est de l'ordre de 0,05 cm³/g, soit environ 20 fois moindre que celui du matériau de l'art antérieur (valeur du matériau témoin = 0,1145 cm³/g), de sorte qu'il est permis de penser que la diminution considérable du volume poreux réduit d'autant la pénétration du métal liquide dans le matériau sous l'effet de sa pression métallostatique de l'alliage, et donc finalement les risques de corrosion.

Un autre avantage de l'invention, de grande importance pratique, est la facilité de mise en oeuvre de la pâte obtenue selon l'invention pour former un pisé.

En effet, un pisé de l'art antérieur, par exemple celui, à base de spinelle de magnésie, commercialisé sous la référence LS 964 par la Société Norton, s'applique par damage à sec sur la surface à protéger, le pisé étant maintenu à l'aide d'un contre-moule métallique contre la surface à protéger. Puis le contre-moule est porté vers 600°C de manière à chauffer le pisé et à lui conférer une certaine tenue mécanique permettant de retirer le contre-moule sans que le pisé s'effondre. Après retrait du contre-moule, le pisé est porté vers 1200°C par chauffage avec un brûleur.

Le pisé selon l'invention peut s'appliquer sans contre-moule, comme on applique un mortier ou un crépi sur un mur, ce qui est extrèmement commode et pratique. Après durcissement à relativement basse température, le pisé est porté vers 1100°C par chauffage avec un brûleur.

Un autre avantage de l'invention est la possibilité d'appliquer successivement plusieurs couches de pisé, avec ou sans chauffage intermédiaire à 1100°C. En effet, il est particulièrement intéressant de fabriquer un pisé à deux couches, avec une sous-couche (celle en contact avec la paroi à protéger) relativement poreuse et donc apte à supporter de nombreux chocs thermiques, et avec une couche externe (celle en contact avec le métal liquide) relativement peu poreuse.

Enfin, un autre avantage de l'invention est la polyvalence d'utilisation, qui permet de pouvoir fabriquer à partir des mêmes matériaux des pisés de protection et des objets divers pouvant être en contact avec un métal liquide, éventuellement très corrosif.

## EXEMPLES

Exemples 1 à 7

On a préparé, à partir de divers échantillons de spinelle de magnésie (fournisseur : Péchiney Electrométallurgie), une charge ayant la granulométrie suivante :

> 1000 µm        52 % en poids

400 - 1000 µm        4 % en poids

100 - 400 µm        15 % en poids

< 100 µm        29 % en poids

Cette granulométrie a été choisie à la suite d'essais d'orientation.

Dans un malaxeur de 3 litres, on a préparé, par malaxage à la température ambiante pendant 30 minutes, un mélange pâteux homogène de spinelle de magnésie et de liant Géopolymite GP 70 (marque déposée), liant de type PS, dans des proportions variables exprimées par le rapport CH/GP dans lequel CH désigne la masse de spinelle de magnésie et GP la masse de liant exprimée en produit sec.

En vue de la caractérisation du matériau réfractaire, on a ensuite moulé des briquettes de dimensions 120x60x20 mm que l'on a durcies en les portant à 150°C pendant 1 heure. On a enlevé le moule et on a porté ensuite ces briquettes à une température notée T (°C) avec une vitesse de montée égale à 150°C/heure. Un palier d'une heure a été observé à la température de palier T.

Après retour à la température ambiante, on a mesuré la densité d et le volume poreux Vp à l'aide d'un porosimètre à mercure (la densité mesurée est donc une densité "squelettique", le mercure pénètrant dans tous les pores ouverts), la contrainte de rupture RM (flexion 3 points) de chaque matériau réfractaire à partir d'éprouvettes de dimensions 120x20x20 mm. Dans cette série d'essais, la tenue à la corrosion a été évaluée en immergeant des briquettes dans un bain d'Al-Li à 750°C pendant 72 heures et en examinant sur des coupes transversales la profondeur de pénétration de l'alliage.

Comme échantillon témoin (exemple 7) correspondant à la pratique antérieure, on a pris le pisé LS 964 à base de spinelle de magnésie (fournisseur : Norton). A des fins comparatives, ce pisé a été comprimé dans un moule métallique et porté à 600°C et maintenu 12 heures à cette température. La cohésion du pisé étant devenue suffisante, on enlève le moule métallique et on porte la briquette obtenue à 1100°C pendant 1 heure.

Les resultats obtenus figurent sur le tableau qui suit:

| N° d'essai | CH/GT | T (°C) | d | Vp cm$^3$/g | Rm MPa | Pénètration par Al-Li |
|------------|-------|--------|-------|--------|-------|-------------|
| 1 | 85/15 | 1100 | 2,816 | 0,0364 | 8,04 | 2,5 mm |
| 2 | 70/30 | 1100 | 2,692 | 0,0490 | 10,40 | 3 mm |
| 3 | 80/20 | 700 | 3,063 | 0,0603 | 5,95 | 4,5 mm |
| 4 | 80/20 | 1100 | 2,820 | 0,0410 | 13,22 | 3 mm |
| 5 | 85/15 | 700 | 3,009 | 0,0618 | 7,66 | 4,5 mm |
| 6 | 70/30 | 700 | 2,819 | 0,0875 | 6,62 | 5 mm |
| 7 Témoin | | 1100 | 2,370 | 0,1145 | 4,82 | 8 mm |

Exemples 8 à 11 :

Dans ces exemples, analogues aux essais précédents, on a remplacé la tranche granulométrique infé-rieure à 100 μm du spinelle de magnésie utilisé dans les exemples 1 à 7 par du carbure de silicium de même granulométrie mais en faisant varier, outre le rapport CH/GP et T, le pourcentage pondéral de carbure de silicium SiC dans le spinelle de magnésie.

Les résultats obtenus figurent sur le tableau qui suit :

| N°essai | CH/GP | SiC % | T(°C) | d | Vp | Rm | Pénétration par Al-Li |
|---------|-------|-------|-------|-------|--------|-------|-----------------------|
| 8 | 83/17 | 5,7 | 700 | 2,828 | 0,0560 | 9,04 | 4 mm |
| 9 | 76/24 | 14,3 | 700 | 2,755 | 0,0571 | 7,68 | 3,5 mm |
| 10 | 83/17 | 11,4 | 1027 | 2,918 | 0,0238 | 18,04 | 3 mm |
| 11 | 76/24 | 11,4 | 1027 | 2,663 | 0,0635 | 11,62 | 3,5 mm |

Exemples 12 à 14

Dans ces exemples, analogue à la série d'essais 1 à 7, on a introduit un additif minéral boré, le Sogébor C (Marque déposée de la Société Sogérem), dans la charge de spinelle de magnésie, l'ensemble constituant la charge totale CH. Les essais se différencient par la teneur de la charge CH en Sogébor C et par le rapport CH/GP. La température T est la même pour tous les essais et vaut 950 °C.

Les résultats obtenus figurent sur le tableau qui suit :

| N° Essai | CH/GP | % Sogébor C de CH total | Rm(MPa) | Pénétration par Al-Li |
|----------|-------|-------------------------|---------|-----------------------|
| 12 | 5,66 | 3 | 28,45 | 2,5 mm |
| 13 | 4 | 0,4 | 17,60 | 3 mm |
| 14 | 4 | 3,8 | 25,86 | 2,5 mm |

Exemple 15 :

On a remplacé le spinelle de magnésie par le corindon brun dans un essai analogue à la série d'essais n° 12-14 :

Les résultats obtenus figurent sur le tableau qui suit :

| N° Essai | CH/GP | % Sogébor C de CH total | Rm(MPa) | Pénétration par Al-Li |
|----------|-------|-------------------------|---------|-----------------------|
| 15 | 2,33 | 6 | 10,41 | 3,5 mm |

Exemples 16 à 18 :

Dans ces essais, on a étudié la tenue au choc thermique et l'influence d'un agent porogène tel que la sciure de bois. Pour cela, on a préparé des échantillons cylindriques de 50 mm de diamètre et de 50 mm de hauteur de composition suivante :

| N°Essai | CH/GP | % Sogébor C de CH total | % agent porogène de CH total |
|---------|-------|-------------------------|------------------------------|
| 16 | 5,66 | 3 % | 0 % |
| 17 | 5,66 | 3 % | 1 % |
| 18 | 5,66 | 3 % | 2 % |

Le test de choc thermique consiste à suivre l'évolution de la perméabilité à l'air d'un échantillon soumis à des chocs thermiques successifs en portant l'échantillon de 20°C à 720°C puis en le trempant dans une grande masse d'eau à 20°C. Ce test est un bon moyen de suivre l'évolution du réfractaire relative à la formation des microfissures par choc thermique.

Les résultats obtenus figurent sur le tableau qui suit :

| N°Essai | Perméabilité (en nPerm) après x chocs thermiques | | | | | |
|---------|-------|------|------|------|------|------|
| | x = 0 | 1 | 2 | 3 | 4 | 5 |
| 16 | 106 | 106 | 149 | 183 | 193 | 238(+124%) |
| 17 | 322 | 389 | 423 | 443 | 486 | 569(+ 76%) |
| 18 | 1955 | 1955 | 2021 | 2021 | 2032 | 2034(+ 4%) |

Avec 2 % d'agent porogène, on a donc obtenu un matériau très peu sensible au choc thermique puisque la perméabilité n'a augmenté que de 4% après 5 chocs thermiques.

Essais 19 à 20 :

Dans ces essais, analogues à l'essai 12, on a incorporé du corindon globulaire fourni par la Société Péchiney Electrométallurgie à certaines tranches granulométriques du spinelle de magnésie (LS 964 de Norton). Le rapport CH/GP a été fixé à 5,66 et la teneur en Sogébor à 3% de la charge totale.

– essai 19 :

On a remplacé la fraction granulométrique inférieure à 100 um de cette charge, qui constitue 20,92 % en poids de la charge, par 15,92% en poids de corindon globulaire et 5% en poids de magnésie, le corindon globulaire et la magnésie étant de granulométrie inférieure à 100 μm.

– essai 20 :

On a remplacé la fraction granulométrique comprise entre 100 et 800 μm, qui constitue 26,62 % en poids de la charge, par du corindon globulaire de sensiblement même granulométrie, et on a remplacé la fraction granulométrique inférieure à 100 μm, qui constitue 2,6 % en poids de la charge, par de la magnésie de sensiblement même granulométrie.

La température T pour ces deux essais a été de 950°C.

On a fabriqué des briques pour évaluer les caractéristiques mécaniques et des creusets (11 cm de diamètre extérieur et 20 cm de hauteur, et 7 cm de diamètre intérieur).

Résultats :

|  | essai 19 | essai 20 |
|---|---|---|
| Rm (MPa) | 6,11 | 10,61 |
| Tenue à la corrosion (*) | excellente | excellente |
| Tenue au choc thermique (**) | bonne | très bonne |

(*) : on a évalué la tenue à la corrosion en dosant des éléments chimiques d'un alliage d'aluminium après sejour de 72 heures de l'alliage à l'état liquide (750°C) dans le creuset.

Avec un alliage d'aluminium 3004 (normalisation de l'IAA), on n'observe aucune pollution de l'alliage par le creuset.

Avec un alliage Al-Li, on a observé un noircissement du creuset en surface traduisant la formation de $LiAlO_2$ (mise en évidence par diffraction X).

(**) : on a évalué la tenue au choc thermique en coulant un alliage d'aluminium (alliage 3004) à 750°C dans le creuset à 20°C et en effectuant plusieurs cycles de montée à 800° et refroidissement à la température ambiante.

Le creuset obtenu à l'essai 19 s'est fissuré lors de la deuxième remontée en température, alors que celui de l'essai 20 est resté intact après plusieurs cycles de montée à 800°C et refroidissement à la température ambiante.

## Revendications

1 - Procédé de fabrication d'un matériau réfractaire du type non-façonné comportant le mélange d'agrégats réfractaires et d'un liant assurant une cohésion par liaison chimique, la mise en forme de ce mélange et sa cuisson, et caractérisé en ce que :

– on mélange, à une température comprise entre la température ambiante et 200°C, une charge comportant des agrégats réfractaires constituée de particules réfractaires qui présentent une répartition granulométrique polymodale, avec un liant liquide alcalin constitué d'un mélange en milieu aqueux de polymères minéraux à base de polysilicate et d'un polymère minéral comportant des groupements sialate (-SiO-O-AlO-O-)$^-$ M$^+$, M désignant un métal alcalin, et on malaxe le mélange de manière à répartir uniformément le liant dans la charge et à former une pâte homogène,

– on met en forme la pâte obtenue et après durcissement du mélange à une température comprise entre la température ambiante et 200°C,

– on porte le mélange durci à une température comprise entre 200 et 1300°C, de manière à obtenir un matériau réfractaire de caractéristiques mécaniques élevées, de grande résistance au choc thermique et à la corrosion chimique.

2 - Procédé selon la revendication 1 dans lequel ledit liant comporte des groupements siloxo et sialate (-SiO-O-AlO-O-SiO-O-)$^-$M$^+$, M désignant un métal alcalin.

3 - Procédé selon une quelconque des revendications 1 et 2 dans lequel le rapport pondéral de ladite charge et dudit liant est compris entre 1 et 10.

4 - Procédé selon la revendication 3 dans lequel le rapport pondéral de ladite charge et dudit liant est compris entre 3 et 9 et de préférence voisin de 5.

5 - Procédé selon une quelconque des revendications 1 à 4 dans lequel lesdits agrégats réfractaires ont une répartition granulométrique bimodale.

6 - Procédé selon la revendication 5 dans lequel la fraction granulométrique supérieure à 800 µm desdits agrégats constitue au moins 50% en poids de la masse desdits agrégats, et dans lequel la fraction granulométrique inférieure à 400 µm constitue au moins 20% en poids de la masse desdits agrégats.

7 - Procédé selon une quelconque des revendications 1 à 6 dans lequel lesdits agrégats réfractaires constituent au moins 75 % en poids de ladite charge minérale.

8 - Procédé selon une quelconque des revendications 1 à 7 dans lequel lesdits agrégats réfractaires sont constitués de spinelle de magnésie.

9 - Procédé selon une quelconque des revendications 1 à 7 dans lequel lesdits agrégats réfractaires sont choisis parmi le carbure de silicium, le nitrure de silicium, la magnésie électrofondue, le corindon blanc, le corindon brun, le corindon globulaire, l'alumine, la zircone, l'oxyde de titane, la silice, l'oxyde de chrome, le carbone, le graphite, les oxydes de terres rares en particulier l'oxyde d'yttrium.

10 - Procédé selon une quelconque des revendications 1 à 7 dans lequel lesdits agrégats réfractaires sont constitués d'un mélange d'au moins deux agrégats réfractaires choisis parmi le spinelle de magnésie, le carbure de silicium, le nitrure de silicium, la magnésie électrofondue, le corindon blanc, le corindon brun, le corindon globulaire, l'alumine, la zircone, l'oxyde de titane, la silice, l'oxyde de chrome, le carbone, le graphite, les oxydes de terres rares en particulier l'oxyde d'yttrium.

11 - Procédé selon la revendication 10 dans lequel la fraction granulométrique supérieure à 800 µm dudit mélange est constituée par le spinelle de magnésie et la fraction granulométrique inférieure à 800 µm dudit mélange comprend du carbure de silicium ou du corindon globulaire ou du corindon globulaire et de la magnésie.

12 - Procédé selon une quelconque des revendications 1 à 11 dans lequel ladite charge comprend un additif minéral non réfractaire de manière à renforcer les caractéristiques mécaniques du matériau réfractaire final.

13 - Procédé selon la revendication 12 dans lequel l'additif minéral constitue moins de 30% en poids de ladite charge.

14 - Procédé selon la revendication 13 dans lequel l'additif minéral est du Sogébor (Marque déposée).

15 - Procédé selon une quelconque des revendications 1 à 14 dans lequel ladite charge contient jusqu'à 5% en poids d'un agent porogène.

16 - Procédé selon la revendication 15 dans lequel l'agent porogène est une matière thermodégradable.

17 - Procédé selon la revendication 16 dans lequel la matière thermodégradable est de la sciure de bois.

18 - Procédé selon une quelconque des revendications 1 à 17 dans lequel on met en forme la pâte obtenue par mélange et malaxage de ladite charge et dudit liant en appliquant au moins une couche de ladite pâte sur une paroi à protéger du contact avec un métal liquide, comme on applique une couche de crépi sur un mur.

19 - Procéde selon la revendication 18 dans lequel on applique deux couches de ladite pâte, chacune d'elles différant par la charge.

20 - Procédé selon la revendication 19 dans lequel on applique une première couche conduisant à un réfractaire de porosité élevée, puis on applique une seconde couche de faible porosité de manière à obtenir une couche réfractaire asymétrique, avec la face destinée à entrer en contact avec un métal liquide de faible porosité.

21 - Procédé selon une quelconque des revendications 1 à 17 dans lequel on met en forme la pâte obtenue par mélange et malaxage de ladite charge et dudit liant par moulage, par extrusion, par injection.

22 - Matériau réfractaire obtenu selon le procédé de l'une quelconque des revendications 1 à 21.

23 - Application du procédé selon une quelconque des revendications 1 à 20 à la protection des équipements de fonderie destinés à être en contact avec un métal liquide, avec un alliage d'aluminium liquide éventuellement corrosif.

24 - Application du procédé selon une quelconque des revendications 1 à 17 et 21 à la fabrication d'objets, de profilés, de tubes, de plaques en matériaux réfractaires.

Office européen
des brevets

**RAPPORT DE RECHERCHE EUROPEENNE**

Numero de la demande

EP    91 42 0425

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 200 816 (J. DAVIDOVITS)<br><br>* revendications; exemples 2-5 * | 1-4,7,<br>9-10 | C04B35/00<br>C04B35/18 |
| D,X | & FR-A-2 489 291<br><br>--- | | |
| A | WO-A-8 802 741 (J. DAVIDOVITS ET AL)<br>* page 2, ligne 26 - page 3, ligne 20 *<br>* page 11, ligne 21 - page 12, ligne 35;<br>revendications 1,6 *<br><br>--- | 1,2,9,12 | |
| A | FR-A-2 528 822 (J. DAVIDOVITS ET AL)<br>* page 3, ligne 28 - page 4, ligne 19;<br>revendications; exemples *<br><br>--- | 1-3,7-10 | |
| A | US-A-4 357 165 (R.L. HELFERICH ET AL)<br><br>* colonne 4, ligne 41 - colonne 5, ligne 38 *<br>* colonne 15, ligne 38 - ligne 61;<br>revendications 1-3,17-19 *<br><br>--- | 1,9,<br>15-17 | |
| A | GB-A-2 149 772 (NICHIAS CORP)<br>* page 1, ligne 23 - ligne 41; revendications 1-3 *<br><br>--- | | **DOMAINES TECHNIQUES RECHERCHES (Int. Cl.5)**<br><br>C04B |
| A | EP-A-0 026 687 (J. DAVIDOVITS)<br>* le document en entier * | 1-24 | |
| D,A | & FR-A-2 464 227<br><br>--- | | |
| A | WO-A-8 303 093 (M. DAVIDOVICS ET AL)<br><br>----- | | |

Le présent rapport a été établi pour toutes les revendications

| Lieu de la recherche | Date d'achèvement de la recherche | Examinateur |
|---|---|---|
| BERLIN | 18 MARS 1992 | KUEHNE H.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

EPO FORM 1503 03.82 (P0402)